# FASCICULE DE BREVET EUROPEEN

(11) **EP 3 795 414 B1**
(45) Date de publication et mention de la délivrance du brevet: **28.02.2024**
(21) Numéro de dépôt: 20196098.6
(22) Date de dépôt: 15.09.2020
(51) Int. Cl.: B60N 2/07, B60N 2/16, B60N 2/42

(54) **ARMATURE D'ASSISE DE SIEGE POUR VEHICULE AUTOMOBILE**
GESTELL FÜR SITZFLÄCHE EINES SITZES FÜR KRAFTFAHRZEUG
SEAT ASSEMBLY FRAME FOR A MOTOR VEHICLE

(30) Priorité: 23.09.2019 FR 1910474
(43) Date de publication de la demande: 24.03.2021
(73) Titulaire: Renault s.a.s, 92100 Boulogne Billancourt (FR)
(72) Inventeur: DENIS, Sandrine, 91470 Limours (FR); DUCHENE, Ludovic, 78114 Magny-les-Hameaux (FR); LECROISEY, Sébastien, 78180 Montigny le Bretonneux (FR)
(74) Mandataire: Renault Group

(56) Documents cités:
- FR-A1- 3 008 361
- US-B1- 6 497 455
- US-B2- 7 328 938

## Description

### DOMAINE TECHNIQUE DE L'INVENTION

La présente invention concerne de manière générale la sécurité des passagers de véhicules automobiles.

Elle concerne plus particulièrement une armature d'assise de siège pour véhicule automobile comprenant :
- deux glissières longitudinales équipées de moyens de fixation à un plancher du véhicule automobile, et
- un cadre de soubassement, également appelé structure porteuse, qui est adapté à recevoir une garniture d'assise et qui est monté sur les deux glissières.

L'invention concerne également un siège comprenant une telle armature d'assise.

Elle s'applique particulièrement avantageusement aux véhicules automobiles dépourvus de console centrale.

### ETAT DE LA TECHNIQUE

Les véhicules automobiles comprennent généralement deux sièges avant situés côte-à-côte.

L'un des sièges, appelé siège conducteur, est situé en regard du volant tandis que l'autre, appelé siège passager, permet d'accueillir un éventuel passager.

En cas de choc latéral sur le véhicule (c'est-à-dire de choc venant du côté du véhicule, selon un axe transversal), un risque est que l'occupant de l'un de ces sièges se déporte et vienne percuter l'occupant de l'autre siège, occasionnant aux deux individus des blessures potentiellement graves.

On cherche alors à réduire les mouvements latéraux des occupants des sièges en cas de choc latéral.

A la suite de crash-tests latéraux, il a été constaté que les armatures des sièges se trouvaient fortement déformées et que cette déformation était en partie à l'origine des déports latéraux des occupants.

L'un des axes de recherche consiste alors à réduire au mieux la déformation des sièges en cas de choc latéral.

Les documents US6497455B1 et US7328938B2 sont connus de l'état de la technique.

### PRESENTATION DE L'INVENTION

Afin de réduire l'amplitude de déformation du siège, la présente invention propose une armature d'assise telle que définie dans l'introduction, dans laquelle il est prévu un élément de butée qui est fixé au cadre de soubassement et qui est adapté à venir au contact de l'une des glissières en cas de choc latéral sur le véhicule automobile.

Pour réduire les déformations du siège et notamment celles du dossier, l'invention propose donc ici de travailler non pas sur l'armature du dossier mais plutôt sur celle de l'assise.

Les études réalisées par la demanderesse ont en effet montré qu'une réduction, même faible, de la déformation de l'armature de l'assise permettait de diminuer fortement le déplacement de l'armature du dossier.

L'armature de l'assise comporte généralement quatre bielles qui permettent de monter l'assise de façon mobile en hauteur par rapport au plancher du véhicule.

Pour réduire la déformation de l'armature de l'assise, qui est majoritairement due à ces bielles car ces dernières peuvent facilement plier en cas de choc latéral, l'invention propose non pas de renforcer les bielles, mais plutôt :
- d'utiliser, de préférence, une traverse solidement fixée au cadre de soubassement (c'est-à-dire à la partie supportée par les bielles) et
- d'y adjoindre un élément de butée qui, dès que les bielles commencent à se déformer lors d'un choc latéral, vient s'appuyer contre l'une des glissières, laquelle est très rigide puisque directement fixée en plusieurs points au plancher du véhicule.

Ainsi, grâce à l'invention, il est possible de restreindre la déformation globale du siège en cas de choc latéral, ce qui améliore grandement la sécurité des passagers du véhicule.

D'autres caractéristiques avantageuses et non limitatives de l'armature d'assise conforme à l'invention, prises individuellement ou selon toutes les combinaisons techniquement possibles, sont les suivantes :
- le cadre de soubassement comporte deux flasques latéraux et deux traverses qui fixent ensemble les deux flasques latéraux, ainsi qu'une traverse arrière qui est fixée aux deux flasques latéraux et sur laquelle est fixé l'élément de butée ;
- la traverse arrière présente une paroi principale dont l'un des bords est au moins en partie replié pour former un rebord sur lequel est fixé l'élément de butée ;
- chaque glissière comporte un rail fixe équipé desdits moyens de fixation et un rail mobile monté coulissant dans le rail fixe ;
- l'élément de butée est adapté à venir au contact du rail fixe de ladite glissière en cas de choc latéral ;
- les rails fixes présentant chacun une paroi interne en regard de la paroi interne de l'autre rail fixe, l'élément de butée est adapté à venir au contact de la paroi interne du rail fixe de ladite glissière en cas de choc latéral ;
- ledit glissière comportant un moyen de fixation avant et un moyen de fixation arrière au plancher du véhicule automobile, ledit élément de butée est adapté à venir au contact de ladite glissière à l'aplomb du moyen de fixation arrière en cas de choc latéral ;
- l'élément de butée présente deux parois pliées à angle droit l'une par rapport à l'autre, dont l'une est fixée au cadre de soubassement et dont l'autre présente un bord adapté à venir au contact de ladite glissière en cas de choc latéral ;
- l'élément de butée présente une zone par laquelle il est adapté à venir au contact de ladite glissière en cas de choc latéral, qui s'étend à une distance de ladite glissière qui est non nulle et qui est inférieure au centimètre ;
- le cadre de soubassement est monté mobile en hauteur sur les deux glissières au moyen de quatre bielles.

L'invention propose également un siège pour véhicule automobile comprenant un dossier qui comporte une armature de dossier sur laquelle est rapportée une garniture de dossier, et une assise qui comporte une armature d'assise telle que précité, sur laquelle est rapportée une garniture d'assise.

L'invention concerne aussi un véhicule automobile comprenant un siège tel que précité qui est situé d'un côté d'une console centrale et dont l'élément de butée est adapté, en cas de choc latéral sur le véhicule automobile, à venir au contact de la glissière qui est située du côté de la console centrale.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique arrière d'une armature d'assise et de dossier d'un siège conforme à l'invention ;
[Fig. 2] est une vue schématique en perspective partiellement éclatée de l'armature d'assise du siège de la figure 1 ;
[Fig. 3] est une vue de détail de l'armature d'assise de la figure 2, représentée sous un premier angle de vue ;
[Fig. 4] est une vue de détail de l'armature d'assise de la figure 2, représentée sous un second angle de vue.

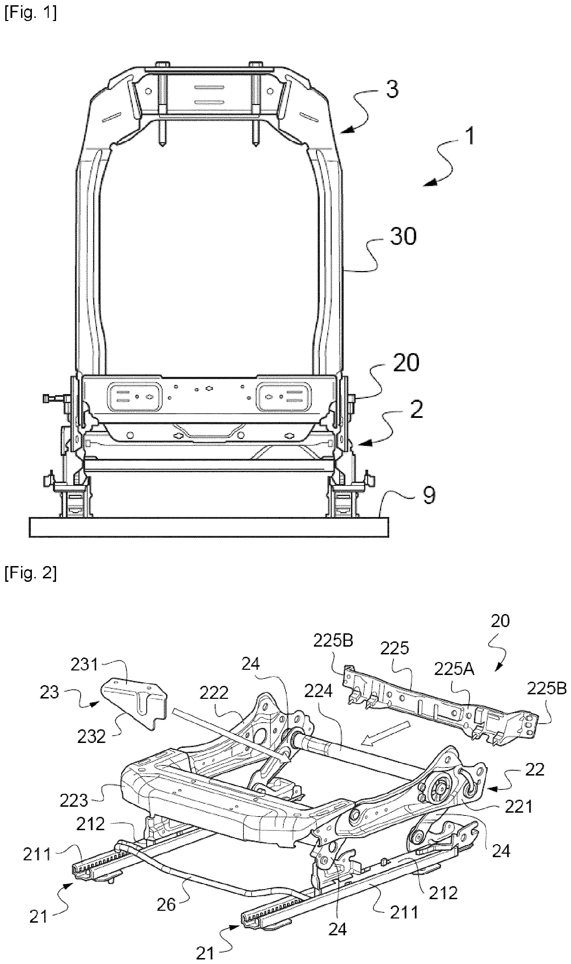

Sur la figure 1, on a représenté l'armature d'un siège 1 prévu pour être installé dans l'habitacle d'un véhicule automobile (voiture, car, camion...) et pour être fixé au plancher 9 de ce véhicule automobile.

On considérera ici que ce véhicule automobile est une voiture qui comporte au moins un siège conducteur situé en regard d'un volant et un siège passager situé à côté du siège conducteur.

Ces deux sièges seront ici sensiblement identiques. On ne décrira alors que le siège 1 conducteur, en considérant qu'il est situé à gauche dans l'habitacle.

On notera que le véhicule pourrait comporter un ou plusieurs sièges arrière ou une banquette arrière, à chacun desquels l'invention pourrait également s'appliquer.

Le siège 1 ici considéré se présente sous la forme d'un fauteuil adapté à recevoir un seul occupant.

Dans la suite de la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes «inférieur » et «supérieur » seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjectif « longitudinal » s'appliquera à un objet ou une direction ou un axe orienté de l'avant vers l'arrière du véhicule, parallèlement à la direction d'avance du véhicule lorsque le volant est en position neutre.

Comme le montre la figure 1, le siège 1 comporte une assise 2 et un dossier 3 comprenant chacun une armature (d'assise ou de dossier) et une garniture, non représentée, rapportée sur l'armature. Cette garniture se présentera par exemple sous la forme d'une pièce de mousse expansée à la forme souhaitée et recouverte d'une housse.

On s'intéressera plus particulièrement ici à l'armature d'assise 20, qui est représentée en détail sur la figure 2.

Cette armature d'assise 20 comporte un cadre de soubassement 22 qui est spécifiquement conçu pour supporter la garniture de façon que l'occupant puisse s'asseoir dessus.

Ce cadre de soubassement 22 pourrait être formé par une coque plastique. Il présente ici préférentiellement une forme de cadre métallique prévu pour recevoir intérieurement un réseau de tiges et de ressorts supportant la garniture.

Dans le mode de réalisation ici illustré, le cadre de soubassement 22 comporte deux flanc, appelés « flasques latéraux 221, 222 », qui sont positionnés dans des plans verticaux parallèles et qui s'étendent en longueur selon des axes longitudinaux. Il comporte également une traverse située à l'arrière et appelée « tube arrière d'assise 224 » et une traverse avant 223. Ce tube arrière d'assise 224 et cette traverse avant 223 relient les deux flasques latéraux 221, 222 de façon à les fixer ensemble.

La traverse avant 223 est à cet effet fixée par ses extrémités aux extrémités avant des deux flasques latéraux 221, 222. Le tube arrière d'assise 224, qui se présente sous la forme d'un arbre cylindrique de révolution autour d'un axe transversal, est en revanche monté mobile en rotation sur les extrémités arrière des deux flasques latéraux 221, 222.

L'armature d'assise 20 est prévue pour être montée mobile en translation sur le plancher 9 du véhicule automobile.

Comme le montre la figure 2, elle comporte à cet effet deux glissières 21 longitudinales.

Chaque glissière 21 comporte un rail mobile 212 supérieur couplé à l'un des flasques latéraux 221, 222, et un rail fixe 211 inférieur qui est monté coulissant par rapport au rail mobile 212 et qui est équipé de moyens de fixation au plancher 9 du véhicule.

Ces deux glissières 21 sont situées en parallèle et offrent donc à l'assise 2 une mobilité de coulissement en translation. Des moyens de crantage, non visibles sur les figures, permettent de bloquer cette mobilité. Pour libérer cette mobilité, un levier situé à l'avant des glissières 21 (appelé palonnier 26) peut être actionné manuellement par l'occupant du siège 1.

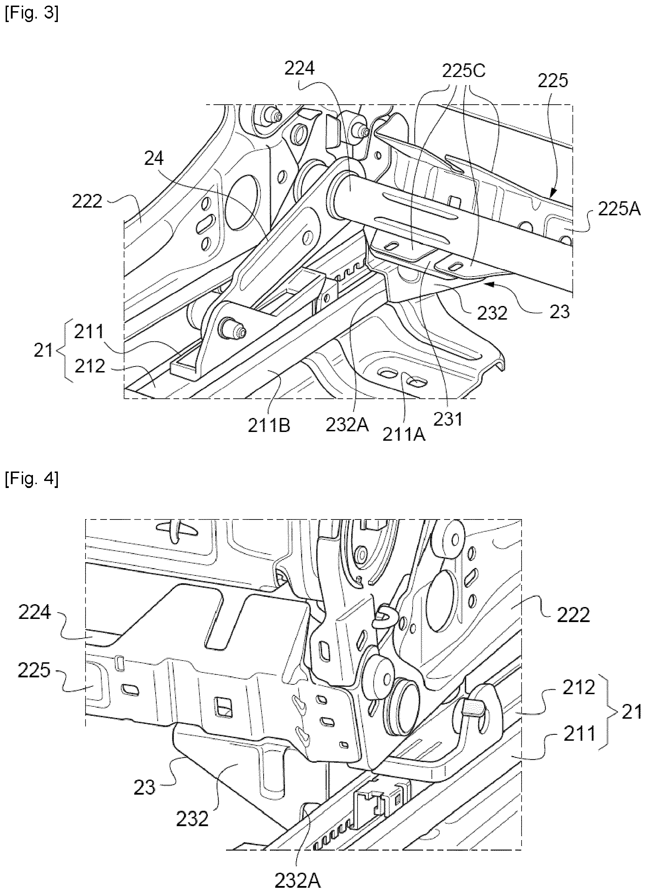

On peut observer sur la figure 2 que chaque rail fixe 211 est profilé et présente une section transversale en forme de U. Chaque rail fixe 211 présente ainsi une paroi de fond bordée, d'un côté, par une paroi interne 211B (voir figure 3) située en regard de la paroi interne de l'autre rail fixe 211, et, de l'autre côté, par une paroi externe. Les bords supérieurs de ces parois internes et externes sont repliées l'une vers l'autre et vers le bas.

Chaque rail fixe 211 comporte deux moyens de fixation au plancher 9 du véhicule, dont l'un est situé du côté de son extrémité avant et dont l'autre est situé du côté de son extrémité arrière.

Comme le montre la figure 3, chaque moyen de fixation se présente sous la forme d'une paroi métallique qui est soudée à la paroi de fond du rail fixe 211, qui déborde du côté intérieur du rail fixe 211 et qui présente au moins une ouverture de passage 211A d'une vis de fixation.

Les ouvertures de passage 211A forment ainsi les moyens de fixation de l'ossature d'assise 20 au plancher 9 du véhicule automobile.

On pourrait prévoir que le cadre de soubassement 22 soit directement fixé aux rails mobiles 212 des glissières 21.

Toutefois, ici et de façon préférentielle, il est monté mobile en hauteur sur les deux glissières 21 au moyen de quatre bielles 24.

Comme le montre la figure 2, deux bielles 24 avant sont ainsi articulées, d'un côté, sur les rails mobiles 212, et, de l'autre sur les flasques latéraux 221, 222. Deux bielles 24 arrière sont en outre articulées d'un côté sur les rails mobiles 212, et sont fixées de l'autre au tube arrière d'assise 224.

Le cadre de soubassement 22 bénéficie ainsi d'une mobilité dite de translation rotative, grâce aux parallélogrammes formés par les quatre bielles 24.

En cas de choc latéral sur le véhicule automobile, le risque est que ces bielles 24, qui sont formées par de fines plaques métalliques, plient et entraînent ainsi une déformation importante de l'ensemble du siège 1.

Pour restreindre au mieux ce risque de déformation, l'armature d'assise 20 est tout d'abord équipée d'une traverse arrière 225 qui est fixée par ses extrémités aux deux flasques latéraux 221, 222. Cette traverse arrière 225 est située à proximité du tube arrière d'assise 224. Elle est même ici située à l'arrière de celle-ci.

En outre, selon une caractéristique particulièrement avantageuse de l'invention, l'armature d'assise 20 comporte un élément de butée 23 qui est fixé au cadre de soubassement 22, et plus précisément ici à la traverse arrière 225, et qui est adapté à venir au contact de l'une des glissières 21 en cas de choc latéral sur le véhicule automobile.

La traverse arrière 225 est allongée selon un axe transversal. Comme le montre la figure 2, elle présente une paroi principale 225A dont les extrémités 225B sont repliées vers l'arrière puis recourbés vers l'extérieur de façon à pouvoir épouser la forme d'une partie correspondante des deux flasques latéraux 221, 222. Ainsi la traverse arrière 225, qui est ici réalisée par découpe et pliage d'une tôle en acier, peut-elle être soudée par ses extrémités aux flasques latéraux 221, 222.

Ici, pour accroître la rigidité de cette traverse arrière 225, les deux bords de la paroi principale 225A sont recourbés vers l'avant.

Comme le montre la figure 3, ces deux bords repliés portent chacun, du côté de leurs extrémités, deux languettes 225C qui s'élèvent de part et d'autre du tube arrière d'assise 24.

Comme le montre la figure 2, l'élément de butée 23 présente pour sa part une forme d'équerre.

Comme le montre la figure 3, il comporte ainsi deux parois 231, 232 pliées à angle droit l'une par rapport à l'autre, dont une paroi supérieure 231 qui est fixée au cadre de soubassement 22, et plus précisément ici à deux des languettes 225C de la traverse arrière 225, et dont une paroi inférieure 232 qui présente une zone adaptée à venir au contact de la paroi interne du rail fixe 211 de la glissière 21 droite en cas de choc latéral.

Cette paroi inférieure 232 présente à cet effet une forme de triangle dont le bord d'hypoténuse présente une échancrure qui délimite un bord 232A vertical et parallèle à la paroi interne du rail fixe 211.

La forme et la position de l'élément de butée 23 sont telles que ce bord 232A se trouve situé, en l'absence de choc, en regard de la paroi interne de la glissière 21 et à une distance d de celui-ci qui est de préférence :
- non nulle de façon à éviter tout frottement entre ce bord et la glissière lors du réglage de la hauteur ou de la position avant/arrière de l'assise 2 par rapport au plancher 9, et
- inférieure au centimètre de façon à pouvoir venir rapidement au contact de cette zone en cas de choc latéral.

Cette distance d est de préférence comprise entre 3 et 5 mm.

L'objectif est que l'élément de butée 23 vienne au contact de la glissière 21 droite si un choc latéral se produit à une vitesse élevée.

Le bord 232A de l'élément de butée 23 présente une hauteur telle qu'il est adapté à venir au contact de la glissière 21 droite en cas de choc latéral quelle que soit la hauteur du cadre de soubassement 22 par rapport aux deux glissières 21, c'est-à-dire quelle que soit l'orientation des bielles 24.

Ici, cet élément de butée 23 est réalisé par découpe et pliage d'une tôle en acier, et il est soudé à la traverse arrière 225.

L'épaisseur de la tôle utilisée est ici compris entre 2 et 3 mm.

La position longitudinale de l'élément de butée 23 par rapport aux glissières 21 est telle que lorsque le siège 1 est en position reculée au maximum, l'élément de butée 23 se trouve à l'aplomb du moyen de fixation arrière 211A de la glissière droite, c'est-à-dire au niveau de l'une des deux zones les plus robustes de cette glissière.

Comme le montrent les figures 3 et 4, l'élément de butée 23 est situé entre les deux glissières 21, de façon à ne pas accroître l'encombrement du siège 1.

Le véhicule automobile comportant, entre le siège conducteur et le siège passager, une console centrale (dans laquelle est par exemple prévu un écran d'affichage), l'élément de butée 23 est avantageusement situé du côté de la glissière la plus proche de la console centrale.

Sur le siège conducteur (qui, dans notre exemple, est situé du côté gauche du véhicule), cet élément de butée 23 est donc situé du côté de la glissière droite de façon à pouvoir restreindre la déformation du siège en cas de choc latéral venant de la droite. Il permet donc alors de restreindre le déport du conducteur vers le passager.

Sur le siège passager, cet élément de butée 23 est situé du côté de la glissière gauche de façon à pouvoir restreindre la déformation du siège en cas de choc latéral venant de la gauche. Il permet donc alors de restreindre le déport du passager vers le conducteur.

La présente invention n'est nullement limitée au mode de réalisation décrit et représenté, mais l'homme du métier saura y apporter toute variante conforme à l'invention.

## Revendications

1. Armature d'assise (20) de siège (1) pour véhicule automobile comprenant :
- deux glissières (21) longitudinales équipées de moyens de fixation (211A) à un plancher (9) du véhicule automobile, et
- un cadre de soubassement (22) qui est adapté à recevoir une garniture d'assise et qui est monté sur les deux glissières (21),
**caractérisée en ce qu'**elle comporte un élément de butée (23) qui est fixé au cadre de soubassement (22) et qui est adapté à venir au contact de l'une des glissières (21) en cas de choc latéral sur le véhicule automobile.

2. Armature d'assise (20) selon la revendication précédente, dans laquelle le cadre de soubassement (22) comporte deux flasques latéraux (221, 222) et deux traverses (223, 224) qui fixent ensemble les deux flasques latéraux (221, 222), ainsi qu'une traverse arrière (225) qui est fixée aux deux flasques latéraux (221, 222) et sur laquelle est fixé l'élément de butée (23).

3. Armature d'assise (20) selon la revendication précédente, dans laquelle la traverse arrière (225) présente une paroi principale (225A) dont l'un des bords est au moins en partie replié pour former un rebord (225B) sur lequel est fixé l'élément de butée (23).

4. Armature d'assise (20) selon l'une des revendications précédentes, dans laquelle chaque glissière (21) comporte un rail fixe (211) équipé desdits moyens de fixation (211A) et un rail mobile (212) monté coulissant dans le rail fixe (211), et dans laquelle l'élément de butée (23) est adapté à venir au contact du rail fixe (211) de ladite glissière (21) en cas de choc latéral.

5. Armature d'assise (20) selon la revendication précédente, dans laquelle les rails fixes (211) présentant chacun une paroi interne (211B) en regard de la paroi interne de l'autre rail fixe (211), l'élément de butée (23) est adapté à venir au contact de la paroi interne du rail fixe (211) de ladite glissière (21) en cas de choc latéral.

6. Armature d'assise (20) selon l'une des revendications précédentes, dans laquelle ladite glissière (21) comportant un moyen de fixation avant et un moyen de fixation arrière (211A) au plancher (9) du véhicule automobile, ledit élément de butée (23) est adapté à venir au contact de ladite glissière (21) à l'aplomb du moyen de fixation arrière (211A) en cas de choc latéral.

7. Armature d'assise (20) selon l'une des revendications précédentes, dans laquelle l'élément de butée (23) présente deux parois (231, 232) pliées à angle droit l'une par rapport à l'autre, dont l'une est fixée au cadre de soubassement (22) et dont l'autre présente un bord (232A) adapté à venir au contact de ladite glissière (21) en cas de choc latéral.

8. Armature d'assise (20) selon l'une des revendications précédentes, dans laquelle l'élément de butée (23) présente une zone (232A) par laquelle il est adapté à venir au contact de ladite glissière (21) en cas de choc latéral, qui s'étend à une distance de la glissière (21) qui est non nulle et qui est inférieure au centimètre.

9. Siège (1) pour véhicule automobile comprenant un dossier (3) qui comporte une armature de dossier (30) sur laquelle est rapportée une garniture de dossier, **caractérisé en ce qu'**il comprend une assise (2) qui comporte une armature d'assise (20) conforme à l'une des revendications précédentes, sur laquelle est rapportée une garniture d'assise.

10. Véhicule automobile comprenant un siège (1) conforme à la revendication précédente et situé d'un côté d'une console centrale, dans lequel ledit élément de butée (23) est adapté, en cas de choc latéral sur le véhicule automobile, à venir au contact de la glissière (21) située du côté de la console centrale.

## Patentansprüche

1. Sitzteilgestell (20) eines Sitzes (1) für ein Kraftfahrzeug, umfassend:
- zwei längs verlaufende Gleitschienen (21), die mit Befestigungsmitteln (211A) zur Befestigung an einem Boden (9) des Kraftfahrzeugs ausgestattet sind, und
- einen Unterbaurahmen (22), der dazu ausgestaltet ist, ein Sitzteilpolster aufzunehmen, und der an den beiden Gleitschienen (21) montiert ist,
**dadurch gekennzeichnet, dass** es ein Anschlagelement (23) beinhaltet, das an dem Unterbaurahmen (22) befestigt ist und das dazu ausgestaltet ist, bei einem Seitenaufprall auf das Kraftfahrzeug mit einer der Gleitschienen (21) in Kontakt zu gelangen.

2. Sitzteilgestell (20) nach dem vorhergehenden Anspruch, bei dem der Unterbaurahmen (22) zwei seitliche Wangen (221, 222) beinhaltet und zwei Traversen (223, 224), die gemeinsam die beiden seitlichen Wangen (221, 222) befestigen, sowie eine hintere Traverse (225), die an den beiden seitlichen Wangen (221, 222) befestigt ist und an der das Anschlagelement (23) befestigt ist.

3. Sitzteilgestell (20) nach dem vorhergehenden Anspruch, bei dem die hintere Traverse (225) eine Hauptwand (225A) aufweist, von der eine der Kanten mindestens zum Teil umgebogen ist, um einen Rand (225B) zu bilden, an dem das Anschlagelement (23) befestigt ist.

4. Sitzteilgestell (20) nach einem der vorhergehenden Ansprüche, bei dem jede Gleitschiene (21) eine feststehende Schiene (211), die mit den Befestigungsmitteln (211A) ausgestattet ist, und eine bewegliche Schiene (212), die verschieblich in der feststehenden Schiene (211) montiert ist, beinhaltet, und bei dem das Anschlagelement (23) dazu ausgestaltet ist, bei einem Seitenaufprall in Kontakt mit der feststehenden Schiene (211) der Gleitschiene (21) zu gelangen.

5. Sitzteilgestell (20) nach dem vorhergehenden Anspruch, bei dem die feststehenden Schienen (211) jeweils eine Innenwand (211B) gegenüber der Innenwand der anderen feststehenden Schiene (211) aufweisen, wobei das Anschlagelement (23) dazu ausgestaltet ist, bei einem Seitenaufprall mit der Innenwand der feststehenden Schiene (211) der Gleitschiene (21) in Kontakt zu gelangen.

6. Sitzteilgestell (20) nach einem der vorhergehenden Ansprüche, bei dem die Gleitschiene (21) ein vorderes Befestigungsmittel und ein hinteres Befestigungsmittel (211A) zur Befestigung am Boden (9) des Kraftfahrzeugs beinhaltet, wobei das Anschlagelement (23) dazu ausgestaltet ist, bei einem Seitenaufprall mit der Gleitschiene (21) in der Lotrechten des hinteren Befestigungsmittels (211A) in Kontakt zu gelangen.

7. Sitzteilgestell (20) nach einem der vorhergehenden Ansprüche, bei dem das Anschlagelement (23) zwei rechtwinklig zueinander umgebogene Wände (231, 232) aufweist, von denen die eine am Unterbaurahmen (22) befestigt ist und von denen die andere eine Kante (232A) aufweist, die dazu ausgestaltet ist, bei einem Seitenaufprall mit der Gleitschiene (21) in Kontakt zu gelangen.

8. Sitzteilgestell (20) nach einem der vorhergehenden Ansprüche, bei dem das Anschlagelement (23) einen Bereich (232A) aufweist, über den es dazu ausgestaltet ist, bei einem Seitenaufprall mit der Gleitschiene (21) in Kontakt zu gelangen, und der sich in einem Abstand von der Gleitschiene (21) erstreckt, der ungleich null ist und weniger als einen Zentimeter beträgt.

9. Sitz (1) für ein Kraftfahrzeug, umfassend eine Rückenlehne (3), die ein Rückenlehnengestell (30) beinhaltet, an dem ein Rückenlehnenpolster angebracht ist, **dadurch gekennzeichnet, dass** es ein Sitzteil (2) umfasst, das ein Sitzteilgestell (20) nach einem der vorhergehenden Ansprüche beinhaltet, an dem ein Sitzteilpolster angebracht ist.

10. Kraftfahrzeug, umfassend einen Sitz (1) nach dem vorhergehenden Anspruch, der auf einer Seite einer Mittelkonsole gelegen ist, bei dem das Anschlagelement (23) dazu ausgestaltet ist, bei einem Seitenaufprall auf das Kraftfahrzeug mit der auf der Seite der Mittelkonsole gelegenen Gleitschiene (21) in Kontakt zu gelangen.

## Claims

1. Seat pan frame (20) of a seat (1) for a motor vehicle, comprising:
- two longitudinal slides (21) equipped with fastening means (211A) for fastening to a floor (9) of the motor vehicle, and
- an understructure framework (22) that is designed to receive a seat pan trim and that is mounted on the two slides (21),
**characterized in that** it has a stop element (23) that is fastened to the understructure framework (22) and that is designed to come into contact with one of the slides (21) in the event of a lateral impact on the motor vehicle.

2. Seat pan frame (20) according to the preceding claim, wherein the understructure framework (22) has two lateral flanges (221, 222) and two crossmembers (223, 224) that fasten the two lateral flanges (221, 222) together, and a rear crossmember (225) that is fastened to the two lateral flanges (221, 222) and to which the stop element (23) is fastened.

3. Seat pan frame (20) according to the preceding claim, wherein the rear crossmember (225) has a main wall (225A) of which one of the edges is at least partially folded back so as to form a lip (225B) to which the stop element (23) is fastened.

4. Seat pan frame (20) according to one of the preceding claims, wherein each slide (21) has a fixed rail (211) equipped with said fastening means (211A) and a mobile rail (212) mounted so as to be able to slide in the fixed rail (211), and wherein the stop element (23) is designed to come into contact with the fixed rail (211) of said slide (21) in the event of a lateral impact.

5. Seat pan frame (20) according to the preceding claim, wherein, the fixed rails (211) each having an internal wall (211B) facing the internal wall of the other fixed rail (211), the stop element (23) being designed to come into contact with the internal wall of the fixed rail (211) of said slide (21) in the event of a lateral impact.

6. Seat pan frame (20) according to one of the preceding claims, wherein, said slide (21) having a front fastening means and a rear fastening means (211A) for fastening to the floor (9) of the motor vehicle, said stop element (23) being designed to come into contact with said slide (21) vertically in line with the rear fastening means (211A) in the event of a lateral impact.

7. Seat pan frame (20) according to one of the preceding claims, wherein the stop element (23) has two walls (231, 232) folded at right angles to one another, one of which is fastened to the understructure framework (22) and the other of which has an edge (232A) designed to come into contact with said slide (21) in the event of a lateral impact.

8. Seat pan frame (20) according to one of the preceding claims, wherein the stop element (23) has a zone (232A) via which it is designed to come into contact with said slide (21) in the event of a lateral impact, which extends at a distance from the slide (21) that is non-zero and that is less than a centimetre.

9. Seat (1) for a motor vehicle, comprising a backrest (3) that has a backrest frame (30) to which a backrest trim is attached, **characterized in that** it comprises a seat pan (2) that has a seat pan frame (20) in accordance with one of the preceding claims, to which a seat pan trim is attached.

10. Motor vehicle comprising a seat (1) in accordance with the preceding claim and situated on one side of a central console, wherein said stop element (23) is designed, in the event of a lateral impact on the motor vehicle, to come into contact with the slide (21) situated on the side of the central console.
